# EUROPEAN PATENT APPLICATION

(11) **EP 2 455 903 A1**
(43) Date of publication of application: **23.05.2012**
(21) Application number: 10014332.0
(22) Date of filing: 05.11.2010
(51) Int. Cl.: G06Q 20/00, G06Q 30/00

(54) **Method and payment service center**

(71) Applicant: Deutsche Telekom AG, 53113 Bonn (DE)
(72) Inventor: Schultze, Bernd, 64342 Seeheim-Jugenheim (DE)
(74) Representative: Schwöbel, Thilo K.

(57) **Abstract**

The present invention relates to a method for processing payment related information for payment transactions to be conducted via a data communications network, the payment related information being processed as a result of an order to pay a payee on behalf of a payer by debiting a payer account via a plurality of different online merchant systems, wherein the payee offers to the payer a plurality of debit options, each debit option being associated with involving a different of a plurality of payment service providers for conducting the payment transaction using the debit option, wherein the method comprises the use of a payment service center and the steps of:
-- exchanging first data between the merchant system of the payee and the payment service center, the first data comprising at least partly payment related information for payment transactions according to a first data format,
-- exchanging second data between a system of one of the plurality of payment service providers and the payment service center, the second data comprising at least partly payment related information for payment transactions according to a second data format, the second data format being dependent on the one of the plurality of payment service providers involved.

## Description

### BACKGROUND

The present invention relates to a method for processing payment related information for payment transactions to be conducted via a data communications network. Furthermore, the present invention relates to a payment service center and to a program comprising a computer readable program code.

In conducting payment transactions online, it is desirable to protect the payment information of a customer or a payer. A relatively large infrastructure exists for financial transactions with a large number of participants. A customer may prefer not to send sensitive payment information, such as the customer's credit card number, to a merchant's or payee's online system such as on the Internet.

Following reported data security breaches of high profile online stores, the electronic commerce industry established a payment data security standard known as PCI DSS (Payment Card Industry Data Security Standard). PCI DSS may be understood to place responsibility on merchants for perpetual costs of implementation, maintenance, and audit for data security.

It is desirable to reduce the effort needed and/or the required resources provided by merchants to offer a customer (or a payer) a plurality of different payment possibilities. It may furthermore be desirable to promote a reduction in direct and/or collateral damage that may result in an event of compromise of data security in the system of the merchant or payee. It may be desirable to promote reliability and/or security of transactions such as by entities participating in the transactions.

### SUMMARY

An object of the present invention is to provide a method for processing payment related information for payment transactions to be conducted via a data communications network, the method providing the possibility for a merchant (or payee)
-- of offering to its clients (or payers) a plurality of payment service providers, and simultaneously
-- of freeing the merchant's system from the need of being in compliance with the specific requirements of the plurality of payment service providers.

The object of the present invention is achieved by a method for processing payment related information for payment transactions to be conducted via a data communications network, the payment related information being processed as a result of an order to pay a payee on behalf of a payer by debiting a payer account via a plurality of different online merchant systems, wherein the payee offers to the payer a plurality of debit options, each debit option being associated with involving a different of a plurality of payment service providers for conducting the payment transaction using the debit option, wherein the method comprises the use of a payment service center and the steps of:
-- exchanging first data between the merchant system of the payee and the payment service center, the first data comprising at least partly payment related information for payment transactions according to a first data format,
-- exchanging second data between a system of one of the plurality of payment service providers and the payment service center, the second data comprising at least partly payment related information for payment transactions according to a second data format, the second data format being dependent on the one of the plurality of payment service providers involved.

According to the present invention, it is advantageously possible that a plurality of different payment service providers can be offered by a merchant (or a payee) without the need of maintaining a plurality of different interfaces to such a plurality of payment service providers. This realizes a multi payment service functionality and can be implemented by means of a multi payment service centre.

The payment service center according to the present invention provides a unification of payment interfaces to the plurality of payment service providers such that a merchant is only required to provide for the exchange of payment related information to the payment service center, i.e. involving one kind of interface, or compliance with only one set of required data structure or rules.

It is advantageous according to the present invention that further payment related functions such as fraud detection are easily possible to realize for the plurality of different payment service providers such that it is effectively possible for a merchant to be informed about the relevant figures regarding sales volume or the like. This has the further benefit of reducing the risk of fraud that may be incurred in relation to conventional payment systems.

According to the present invention, it is preferred that for an initial payment process involving the payee and one of the plurality of payment service providers, the method comprises the steps of:
-- the payment service center sending a payment request to the one of the plurality of payment service providers,
-- the one of the plurality of payment service providers processing the payment request by requesting at least one credential information from the payer,
-- the one of the plurality of payment service providers returning an acceptance information to the payment service center, the acceptance information being transmitted to the payee.

According to the present invention, it is thereby advantageously possible that a customer is not required to follow a new process for conducting an online payment transaction. This allows for an increased security feeling on the side of the customer (or payer).

According to the present invention, it is furthermore preferred that for a subsequent payment process involving the payee and the one of the plurality of payment service providers, the method comprises the steps of:
-- the payment service center sending a payment request to the one of the plurality of payment service providers, the payment request comprising a handle information, the handle information identifying the payer and the payee,
-- the one of the plurality of payment service providers processing the payment request, the handle information being used for identifying the payer,
-- the one of the plurality of payment service providers returning an acceptance information to the payment service center, the acceptance information being transmitted to the payee.

Thereby, it is advantageously possible that a repeated subsequent online transaction can be performed in a more easy manner and hence potentially increase the willingness for the customer to choose a merchant offering such a simplified payment transaction process.

According to the present invention, it is furthermore preferred that during the step of processing the payment request using the handle information, no additional input of the payer is requested by the one of the plurality of payment service providers.

This additionally allows for an increase ease and convenience in conducting the payment transaction.

According to the present invention, it is furthermore preferred that after an initial payment process involving the payee and the one of the plurality of payment service providers, and prior to a subsequent payment process involving the payee and the one of the plurality of payment service providers, the inventive method comprises the steps of:
-- the payment service center sending a confirmation request information to the payer, the confirmation request information inquiring whether the payer seeks to facilitate subsequent payment processes after the initial payment process, and the payer answering by a confirmation answer information,
-- the payment service center sending a payment confirmation request to the one of the plurality of payment service providers,
-- the one of the plurality of payment service providers processing the payment confirmation request and returning a confirmation information to the payment service center, the confirmation information comprising a handle information, the handle information identifying the payer and the payee.

Thereby, it is advantageously possible to provide a very secure yet very simple and convenient solution for the online payment transaction process.

According to the present invention, it is preferred that the step of the one of the plurality of payment service providers processing the payment confirmation request involves the one of the plurality of payment service providers requesting at least one credential information from the payer.

It is advantageously possible according to the present invention that by such a requesting of at least one credential information from the payer, the level of security is greatly enhanced compared to a solution without such a requesting of at least one credential information.

The present invention further relates to a payment service center for processing payment related information for payment transactions to be conducted via a data communications network, the payment related information being processed as a result of an order to pay a payee on behalf of a payer by debiting a payer account via a plurality of different online merchant systems, wherein the payee offers to the payer a plurality of debit options, each debit option being associated with involving a different of a plurality of payment service providers for conducting the payment transaction using the debit option, wherein the payment service center is configured such that an exchange of first data between the merchant system of the payee and the payment service center is provided, the first data comprising at least partly payment related information for payment transactions according to a first data format, wherein the payment service center is further configured such that an exchange of second data between a system of one of the plurality of payment service providers and the payment service center is provided, the second data comprising at least partly payment related information for payment transactions according to a second data format, the second data format being dependent on the one of the plurality of payment service providers involved.

Thereby, it is advantageously possible that a plurality of different payment service providers can be offered by a merchant without the need of maintaining a plurality of different interfaces to such a plurality of payment service providers.

Furthermore, it is preferred according to the present invention that for an initial payment process involving the payee and one of the plurality of payment service providers , the payment service center is provided such that
-- the payment service center sends a payment request to the one of the plurality of payment service providers,
-- the one of the plurality of payment service providers processes the payment request by requesting at least one credential information from the payer, and
-- the one of the plurality of payment service providers returns an acceptance information to the payment service center, the acceptance information being transmitted to the payee.

According to the present invention, it is furthermore preferred that for a subsequent payment process involving the payee and the one of the plurality of payment service providers, the payment service center is configured such that:
-- the payment service center sends a payment request to the one of the plurality of payment service providers, the payment request comprising a handle information, the handle information identifying the payer and the payee,
-- the one of the plurality of payment service providers processes the payment request, the handle information being used for identifying the payer,
-- the one of the plurality of payment service providers returns an acceptance information to the payment service center, the acceptance information being transmitted to the payee.

Additionally, the present invention relates to a program comprising a computer readable program code for executing an inventive method or for configuring or controlling an inventive payment service center.

### BRIEF DESCRIPTION OF THE DRAWINGS

Figure 1 schematically illustrates a system for payment transactions processes comprising a payer, a payee, a payment service center, a bank and a payment service provider.

Figure 2 schematically illustrates a configuration process of the possibility to facilitate repetitive payment transactions.

Figure 3 schematically illustrates the process of a facilitated payment transactions according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

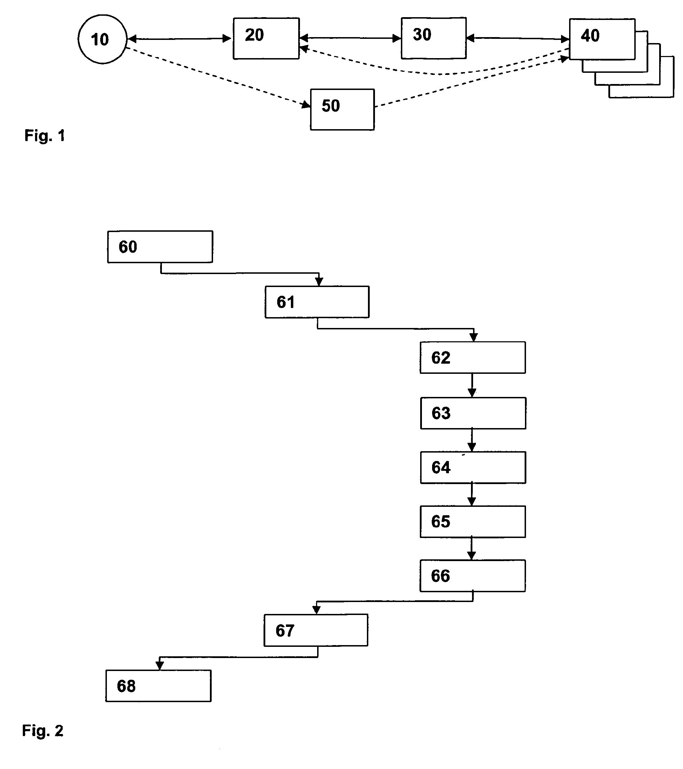

In Figure 1, a system for payment transactions processes is schematically represented. The system comprises a payer 10 or a customer 10, a payee 20 (or a merchant 20), a payment service center 30 and a payment service provider 40. Furthermore, the system comprises a bank or account provider 50.

In the representation of Figure 1, only one payment service provider 40 is explicitly shown. It is to be understood that according to the present invention, a plurality of different payment service providers 40 are to be used at least potentially. Usually, the customer 10 is affiliated to at least one of a plurality of different payment service providers 40 such as "PayPal", "ClickandBuy" or the like. Therefore, the merchant 20 or payee 20 is required to offer transactions being processed by a multitude of different payment service providers 40 according to the preferences of the customer 10.

In Figure 1, the drawn-through lines represent data exchanges and the dashed lines represent the flow of money. The data exchanges for performing a payment transaction according to the present invention can be summarized as follows:
-- the payer 10 requests a payment transaction from the payee 20,
-- the payee 20 contacts the payment service center 30 as an interface for providing the payment transaction functionality (for the merchant 20) for a plurality of different payment service providers 40,
-- the payment service center 30 contacts the one payment service provider 40 (chosen by the payer 10) of the plurality of payment service providers,
-- the money transfer is processed according to established methods from a banking account of the client 10 at a bank 50 to the payment service provider 40 and to the merchant 20 or payee 20.

Thereby, it is advantageously possible according to the present invention, that:
-- first data are exchanged between the payee 20 and the payment service center 30, the first data comprising at least partly payment related information for payment transaction according to a first data format, and that
-- second data are exchanged between the payment service center 30 and the payment service provider 40, the second data comprising at least partly payment related information for payment transaction according to a second data format, the second data format being dependent on the chosen payment service provider 40. This means that the payee 20 can exchange payment related information according to only one format with the payment service center 30.

For an for an initial payment process, the payment service center 30 sends a payment request to the one of the plurality of payment service providers 40, the one of the plurality of payment service providers 40 processes the payment request by requesting at least one credential information from the payer 10, and the one of the plurality of payment service providers 40 returns an acceptance information to the payment service center 30, the acceptance information being transmitted to the payee 20.

Traditionally, the payment transaction involves the client 10 or payer 10 to be transferred to the payment service provider 40 chosen and to input one credential information or a plurality of pieces of credential information. Especially for repeated payment transaction processes between the same parties involved (i.e. the same client 10, the same merchant 20 and the same payment service provider 40), this can be a time consuming method of conducting the payment transaction.

In order to facilitate this process especially with respect to repeated payment transactions between one and the same client 10 or payer 10 and one and the same merchant 20 or payee 20 using one and the same payment service provider 40, the present invention provides the possibility to use a quicker payment transaction process by first performing a configuration or initiation process and subsequently perform the quicker payment transaction process according to the present invention.

According to the present invention, the quick payment process includes a payment request sent from the payment service center 30 to the chosen payment service provider 40, the payment request comprising a handle information identifying the payer 10 and the payee 20. The payment service provider 40 returns an acceptance information to the payment service center 30, the acceptance information being transmitted to the payee 20 indicating that the payment transaction has been accepted.The handle information is generated previously by the payment service provider 40 during a configuration procedure. The mentioned configuration procedure involves a confirmation request information transmitted from the payment service center 30 to the payer 10 requesting whether the payer 10 wants to use a facilitated or quick payment process. The payer 10 answers by means of a confirmation answer information. Subsequently, the payment service center 30 sends a (quick) payment confirmation request to the chosen payment service provider 40. The (quick) payment confirmation request is processed by the chosen payment service provider 40 and a confirmation information returned to the payment service center 30, the confirmation information comprising the handle information (which has been generated previously by the payment service provider 40).

It is to be understood that the handle information is an information that does not indicate neither the client 10 nor the merchant 20 in clear. The handle information comprises an information allowing to identify the client 10 and the merchant 20 by these pieces of information are provided in the handle information in encoded or encrypted form.

According to the present invention, it is possible the handle information furthermore comprises an indication regarding the period of validity of the handle information. Thereby, it is possible that the handle information has only a limited period of validity. The length of the period of validity can either by chosen by the client 10 or by the merchant 20 or by the payment service provider 40.

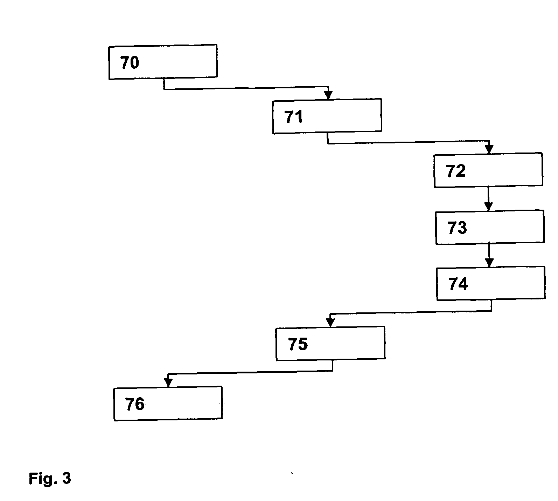

This process is shown in more detail in Figures 2 and 3. Figure 2 schematically illustrates the configuration process of the quicker payment transaction process, and Figure 3 schematically illustrates the quicker payment transaction process according to the present invention.

In Figure 2, the configuration process is initiated by means of a client 10 requesting the configuration of the quick payment transaction process at the merchant's system, i.e. the system of the payee 20. This is represented by a processing step designated by reference sign 60. In this step, the client 10 or payer 10 provides user credentials to the payee 20 such as an e-mail-address and a password or the like (dependent on the specification by the merchant 20). These user credentials allow the merchant 20 to identify the payer 10.

The merchant's system 20 forwards the request to the payment service center 30, transmitting an identification of the merchant (service id) and an identification of the client 10 (client id). The payment service center 30 routes the request to the payment service provider 40 chosen by the client 10 or chosen together by the client 10 and the merchant 20. This is represented by a processing step designated by reference sign 61.

Then, the payment service provider 40 receives the data from the payment service center 30. This is represented by a processing step designated by reference sign 62.

Subsequently, the client 10 performs a login process at the payment service center 40 by providing the credential information of the client 10 stored at the payment service provider 40. This is represented by a processing step designated by reference sign 63. It is to say that this presumes that the client 10 has already registered with the chosen payment service provider 40.

Subsequently, the client 10 inputs further configuration parameters regarding the payment transaction process. This is represented by a processing step designated by reference sign 64. This processing step is only optional.

Subsequently, the payment service provider 40 verifies the client data available such as the credit card number or the like. This is represented by a processing step designated by reference sign 65. This processing step is only optional.

Subsequently, the payment service provider 40 generates a handle information. The handle information is an information identifying the combination of the client 10 and the merchant 20. This is represented by a processing step designated by reference sign 66.

Subsequently, the handle information and the client identification (client id) is transmitted to the payment service center 30. This is represented by a processing step designated by reference sign 67. The payment service center 30 forwards the handle information and the client identification (client id) to the merchant 20.

The merchant 20 stores the handle information and the client identification together with the client data. This is represented by a processing step designated by reference sign 68.

By means of the process illustrated in Figure 2, it is possible for a client 10 and a merchant 20 to use the quick payment transaction process according to the present invention. This is illustrated in Figure 3.

In Figure 3, the quick transaction process is initiated by means of a client 10 requesting the quick payment transaction process at the merchant's system 20, i.e. the system of the payee 20. This is represented by a processing step designated by reference sign 70. In this step, the client 10 or payer 10 provides user credentials to the payee 20 such as an e-mail-address and a password or the like (dependent on the specification by the merchant 20). These user credentials allow the merchant 20 to identify the payer 10.

The merchant's system 20 forwards the request to the payment service center 30, transmitting the identification of the merchant (service id), the identification of the client 10 (client id), the handle information and an amount information (specifying the amount of money to be paid). The payment service center 30 routes the request to the payment service provider 40 chosen by the client 10 or chosen together by the client 10 and the merchant 20. This is represented by a processing step designated by reference sign 71. The payment service center 30 transmits to the payment service provider 40 the handle information, the client identification (client id) and the amount information. By means of the handle information, the merchant 20 and the client 10 can be identified by the payment service provider 40.

The payment service provider 40 receives the data from the payment service center 30, i.e. the handle information, the client identification (client id) and the amount information. This is represented by a processing step designated by reference sign 72.

Subsequently, the payment service provider 40 verifies that data received and (in case of a positive result) approves the payment transaction. This is represented by a processing step designated by reference sign 73. This means that the payment transaction is approved without any additional user input from the side of the client 10 to the payment service provider 40. Therefore, the time required for transferring a browser session to the payment service provider 40 as well as for inputting the user credentials can be greatly reduced.

Subsequently, the payment service provider 40 proceeds with the payment. This is represented by a processing step designated by reference sign 74.

Subsequently, an acknowledgement information is transmitted to the payment service center 30 that the transaction has actually been performed. This is represented by a processing step designated by reference sign 75.

Subsequently, the acknowledgement information is forwarded to the merchant 20. This is represented by a processing step designated by reference sign 76.

## Claims

1. Method for processing payment related information for payment transactions to be conducted via a data communications network, the payment related information being processed as a result of an order to pay a payee (20) on behalf of a payer (10) by debiting a payer account via a plurality of different online merchant systems, wherein the payee (20) offers to the payer (10) a plurality of debit options, each debit option being associated with involving a different of a plurality of payment service providers (40) for conducting the payment transaction using the debit option, wherein the method comprises the use of a payment service center (30) and the steps of:
-- exchanging first data between the merchant system of the payee (20) and the payment service center (30), the first data comprising at least partly payment related information for payment transactions according to a first data format,
-- exchanging second data between a system of one of the plurality of payment service providers (40) and the payment service center (30), the second data comprising at least partly payment related information for payment transactions according to a second data format, the second data format being dependent on the one of the plurality of payment service providers (40) involved.

2. Method according to claim 1, wherein for an initial payment process involving the payee (20) and one of the plurality of payment service providers (40), the method comprises the steps of:
-- the payment service center (30) sending a payment request to the one of the plurality of payment service providers (40),
-- the one of the plurality of payment service providers (40) processing the payment request by requesting at least one credential information from the payer (10),
-- the one of the plurality of payment service providers (40) returning an acceptance information to the payment service center (30), the acceptance information being transmitted to the payee (20).

3. Method according to one of the preceding claims, wherein for a subsequent payment process involving the payee (20) and the one of the plurality of payment service providers (40), the method comprises the steps of:
-- the payment service center (30) sending a payment request to the one of the plurality of payment service providers (40), the payment request comprising a handle information, the handle information identifying the payer (10) and the payee (20),
-- the one of the plurality of payment service providers (40) processing the payment request, wherein the handle information is used for identifying the payer (10) and the payee (20),
-- the one of the plurality of payment service providers (40) returning an acceptance information to the payment service center (30), the acceptance information being transmitted to the payee (20).

4. Method according to one of the preceding claims, wherein during the step of processing the payment request using the handle information, no additional input of the payer is requested by the one of the plurality of payment service providers (40).

5. Method according to one of the preceding claims, wherein
-- after an initial payment process involving the payee (20) and the one of the plurality of payment service providers (40), and
-- prior to a subsequent payment process involving the payee (20) and the one of the plurality of payment service providers (40),
the method comprises the steps of:
-- the payment service center (30) sending a confirmation request information to the payer (10), the confirmation request information inquiring whether the payer (10) seeks to facilitate subsequent payment processes after the initial payment process, and the payer (10) answering by a confirmation answer information,
-- the payment service center (30) sending a payment confirmation request to the one of the plurality of payment service providers (40),
-- the one of the plurality of payment service providers (40) processing the payment confirmation request and returning a confirmation information to the payment service center (30), the confirmation information comprising a handle information, the handle information identifying the payer (10) and the payee (20).

6. Method according to one of the preceding claims, wherein the step of the one of the plurality of payment service providers (40) processing the payment confirmation request involves the one of the plurality of payment service providers (40) requesting at least one credential information from the payer (10).

7. Payment service center (30) for processing payment related information for payment transactions to be conducted via a data communications network, the payment related information being processed as a result of an order to pay a payee (20) on behalf of a payer (10) by debiting a payer (10) account via a plurality of different online merchant systems, wherein the payee (20) offers to the payer a plurality of debit options, each debit option being associated with involving a different of a plurality of payment service providers (40) for conducting the payment transaction using the debit option, wherein the payment service center (30) is configured such that an exchange of first data between the merchant system of the payee (20) and the payment service center (30) is provided, the first data comprising at least partly payment related information for payment transactions according to a first data format, wherein the payment service center (30) is further configured such that an exchange of second data between a system of one of the plurality of payment service providers (40) and the payment service center (30) is provided, the second data comprising at least partly payment related information for payment transactions according to a second data format, the second data format being dependent on the one of the plurality of payment service providers (40) involved.

8. Payment service center (30) according to claim 7, wherein for an initial payment process involving the payee (20) and one of the plurality of payment service providers (40) , the payment service center (30) is provided such that
-- the payment service center (30) sends a payment request to the one of the plurality of payment service providers (40),
-- the one of the plurality of payment service providers (40) processes the payment request by requesting at least one credential information from the payer (10), and
-- the one of the plurality of payment service providers (40) returns an acceptance information to the payment service center (30), the acceptance information being transmitted to the payee (20).

9. Payment service center (30) according to one of the claims 7 or 8, wherein for a subsequent payment process involving the payee (20) and the one of the plurality of payment service providers (40), the payment service center (30) is configured such that:
-- the payment service center (30) sends a payment request to the one of the plurality of payment service providers (40), the payment request comprising a handle information, the handle information identifying the payer (10) and the payee (20),
-- the one of the plurality of payment service providers (40) processes the payment request, the handle information being used for identifying the payer (10) and the payee (20),
-- the one of the plurality of payment service providers (40) returns an acceptance information to the payment service center (30), the acceptance information being transmitted to the payee (20).

10. Program comprising a computer readable program code for executing a method according to one of claims 1 to 6 or for configuring or controlling a payment service center according to one of claims 7 to 9.
